# EUROPEAN PATENT APPLICATION

(11) **EP 3 502 898 A1**
(43) Date of publication of application: **26.06.2019**
(21) Application number: 17208923.7
(22) Date of filing: 20.12.2017
(51) Int. Cl.: G06F 11/07

(54) **DEVICES AND METHODS FOR DETERMINING POSSIBLE CORRUPTION OF DATA STORED IN A MEMORY OF AN ELECTRONIC DEVICE**

(71) Applicant: Vestel Elektronik Sanayi ve Ticaret A.S., 45030 Manisa (TR)
(72) Inventor: YILMAZ, Evren Gökhan, 45030 Manisa (TR)
(74) Representative: Flint, Adam

(57) **Abstract**

A memory (110) of an electronic device (100) has a first portion (111) that is used by an operating system of the electronic device (100), a second portion (112) that is used by one or more software applications running on the electronic device (100), and a third portion (113) that is used by a peripheral device of the electronic device (100). At least one number is stored in a memory location (300) of the third portion (113) of the memory (110) of the electronic device (100). The content of the memory location (300) is read. It is determined that corruption of data stored in the third portion (113) of the memory (110) of the electronic device (100) has occurred if the read content of the memory location (300) is different from the at least one number that was stored in the memory location (300).

## Description

### Technical Field

The present disclosure relates to devices and methods for determining possible corruption of data stored in a memory of an electronic device

### Background

Many electronic devices can be affected by electrostatic discharge (ESD). As a particular example, a memory of an electronic device may become corrupted when subject to an ESD shock. That is, the ESD may cause one of more data values stored in the memory to change. This may result in improper functioning of the electronic device and the electronic device may need to be restarted to correct the problem.

### Summary

According to a first aspect disclosed herein, there is provided a method of determining possible corruption of data stored in a memory used by an electronic device, the memory having a first portion that is used by an operating system of the electronic device, a second portion that is used by one or more software applications running on the electronic device, and a third portion that is used by a peripheral device of the electronic device, the method comprising: storing at least one number in a memory location of the third portion of the memory; reading the content of said memory location; and determining that corruption of data stored in the third portion of the memory has occurred if the read content of said memory location is different from the at least one number that was stored in said memory location.

In an example, the method comprises determining that corruption of data stored in said memory location has occurred if the read content of said memory location is different from the at least one number that was stored in said memory location and there has been no intervening instruction to change the content of said memory location.

In an example, said memory location is set to be read-only after the at least one number was stored in said memory location. The effect of this is that if the read content of said memory location is different from the at least one number that was stored in said memory location, this was not an intended change, indicating that corruption of data stored in the third portion of the memory of the electronic device has occurred.

In an example, the memory is a volatile memory. In other examples, the memory is a non-volatile memory.

In an example, the method comprises storing plural numbers in plural locations.

In an example, the numbers stored form a mathematical sequence.

In an example, the third portion of the memory is physically located in or on the peripheral device.

In an example, the method comprises restarting the electronic device in response to determining that the read content of said memory location is different from the at least one number that was stored in said memory location.

According to a second aspect disclosed herein, there is provided an electronic device comprising a memory having a first portion that is used by an operating system of the electronic device, a second portion that is used by one or more software applications running on the electronic device, and a third portion that is used by a peripheral device of the electronic device; wherein the electronic device is configured to: store at least one number in a memory location of the third portion of the memory; read the content of said memory location; and determine that corruption of data stored in the third portion of the memory has occurred if the read content of said memory location is different from the at least one number that was stored in said memory location.

In an example, the third portion of the memory is physically located in or on the peripheral device.

In an example, the electronic device comprises one or more peripheral devices attached to or otherwise in communication with the electronic device. That is, the main electronic device may have one or more peripheral devices attached, for example in the form of expansion cards or the like, which may be physically connected to a motherboard of the electronic device, and/or in the form of separate devices, which may be connected to the main electronic device via a wired connection (e.g. an HDMI or other wired connection) or via a wireless connection (e.g. via WiFi, Bluetooth, etc.).

In an example, the memory is a volatile memory. In other examples, the memory is a non-volatile memory.

### Brief Description of the Drawings

To assist understanding of the present disclosure and to show how embodiments may be put into effect, reference is made by way of example to the accompanying drawings in which:
Figure 1 shows schematically an example of an electronic device;
Figure 2 illustrates data corruption due to an electrostatic discharge event; and
Figure 3 shows schematically an example in which the electronic device is configured to detect data corruption.

### Detailed Description

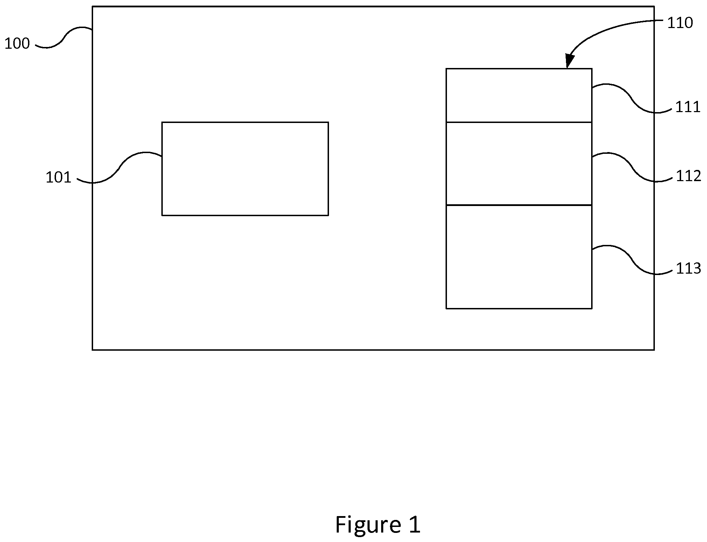

Figure 1 shows schematically an electronic device 100 in accordance with examples described herein. The electronic device 100 may be, for example, a computer system generally, a television set, a PVR (personal video recorder), a DVD player, Blu Ray player, a set-top box, a desktop or laptop or tablet computer, etc., a video game console, a cellular phone (including a so-called "smart phone"), a printer, an electric appliance such as a "white goods" item such as a washing machine, a tumble dryer, a combined washing machine and tumble dryer, a dishwasher, a refrigeration apparatus such as a fridge or freezer or combined fridge-freezer, etc. The electronic device 100 comprises a central processing unit (CPU) 101 and a memory 110.

In operation, the CPU 101 accesses the memory 110 to perform various functionality as known in the art. This comprises performing read data from the memory 110 and, when appropriate, writing data to the memory 110.

The memory 110 is, in this example, a volatile memory. A volatile memory, as opposed to a non-volatile memory, is a computer memory that stores data only as long as its power supply is not interrupted. Examples of suitable volatile memories include most types of dynamic and static random access memory (RAM) units. The concepts described herein may equally be applied to a non-volatile memory in some examples.

The memory 110 is divided into a first portion (or partition) 111, a second portion 112, and a third portion 113. More portions may be present than the three of this example. The three portions 111-113 are used to store data relating to different functionality of the electronic device 100. Specifically, the first portion 111 is used to store data and process instructions relating to an operating system of the electronic device, the second portion 112 is used to store data and process instructions relating to one or more software applications to be run on the electronic device 100, and the third portion 113 is used to store data and process instructions relating to one or more peripheral devices of the electronic device 100. The memory 110 may be a common memory (formed of one or more memory devices) which is shared by the operating system, the one or more software applications, and the one or more peripheral devices. In another example, the third portion 113 of the memory 110 may be physically located in or on a peripheral device. Where there are plural peripheral devices, each may have its own "third portion" 113 of memory used for storing data and processing instructions relating to the peripheral device. In any case, data stored on any of the portions 111-113 may be corrupted if the electronic device 100 is subject to an ESD event 200.

Examples of peripheral devices which may use or have the third portion 113, i.e. memory that is used as "working memory" regardless of whether it is physical memory located on the peripheral device or physical memory located elsewhere in the electronic device 100, include video and audio devices such as decoders, demodulators, tuners, scalers, etc., and various (other) expansion cards. The third portion 113 may therefore be used as, for example, a video memory, a frame buffer, etc.

Corrupt data in the first portion 111 or second portion 112 may be identified by the CPU 101 by inspecting one or more memory locations in the first portion 111 or second portion 112 which should have a particular value during normal operation (for example, values written by the CPU 101 as part of normal functioning of an application, or fixed register values). If the values are not as expected, this can trigger a restart of the electronic device 100.

Another way that corrupt data in the first portion 111 or second portion 112 may be identified is by using a "watch-dog", as known in the art. A watch-dog may use an electronic timer (also called a "computer operating properly" or COP timer) which is regularly reset. Corruption of data in the first portion 111 or second portion 112 will then result in the watch-dog timing out, which can therefore trigger a restart of the electronic device 100.

In either of the cases described above, the system may crash and/or a watch-dog circuit may time out, causing the CPU 101 to reboot the electronic device 100. While traditional systems are able to identify and recover corruptions of data in the first portion 111 and second portion 112 (as mentioned above), corruption of data in the third portion 113 may result in the device 100 performing an incorrect operation without the CPU 101 being aware. The data stored in the third portion 113 is set by the particular peripheral device that is currently using the third portion 113 and therefore the CPU 101 is unable to determine whether a change in one or more critical values has occurred.

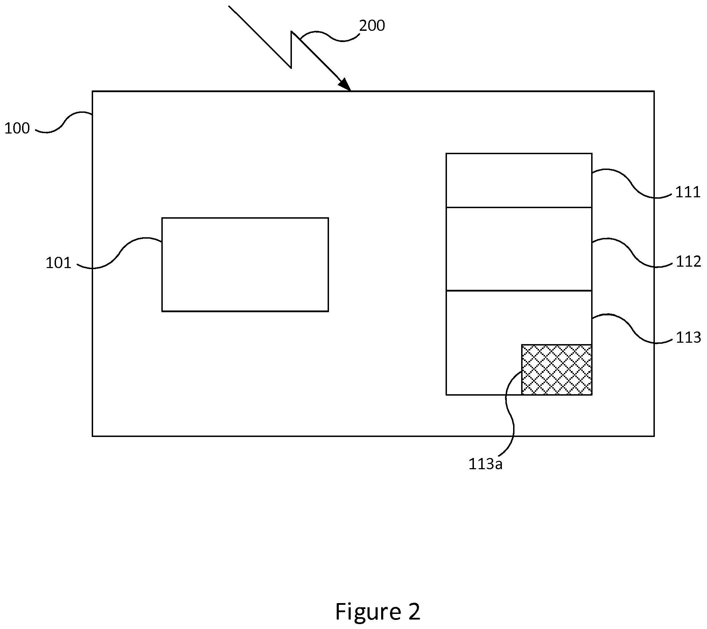

As one specific example to illustrate this, Figure 2 shows schematically an example in which, following the ESD event 200, some data 113a stored in the third portion 113 has become corrupted.

In a specific example to illustrate this further, the electronic device 100 may be a television displaying a video on a screen to a user by using the third portion 113 of the memory 110 to run a video decoder peripheral. In the case of Figure 2, when some data of the video decoder becomes corrupted, the user may see corruptions in the displayed video but the electronic device 100 is unaware of any error. This is because the operating system and application software (running using the uncorrupted first portion 111 and second portion 112, respectively) are unaffected and continue to operate as usual, even though some peripheral device is not operating correctly because of the data corruption in the third portion 113 of memory used by the peripheral device.

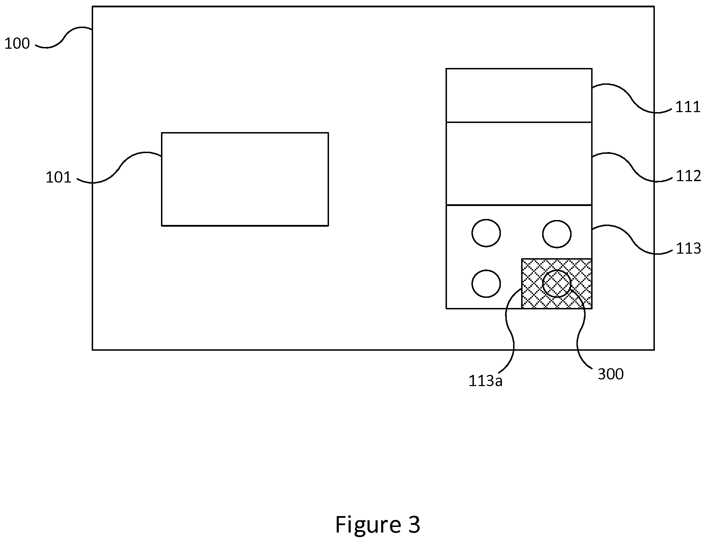

Figure 3 shows schematically an example in which the CPU 101 is able to determine corruption of data in the third portion 113. In this example, at least one memory location 300 (e.g. an unused register or some other location in the memory used by the peripheral device) in the third portion 113 is written to with a specific value (a "magic number") by the CPU 101. This may be performed upon start-up of the peripheral device which is going to use the third portion 113 of the memory 110 to run. The magic numbers are additional values which are not used by the peripheral device itself as part of its normal operation. This is in contrast to the values the CPU 101 may read from the first portion 111 or second portion 112 which do form part of the normal functionality. The magic numbers are, in this sense, "superfluous" values written by the CPU 101 to the third portion 113 only for the purposes of data corruption detection.

Because the magic numbers are written by the CPU 101, the CPU 101 is able to determine when one or more magic numbers have changed. Specifically, the CPU 101 is able to determine that a change to a magic number has occurred which it did not instigate. In one example, the magic numbers are stored in memory locations 300 which are chosen to be memory locations which are not used by the peripheral device in normal operation. Therefore, if one or more magic numbers changes, this can be assumed to be a result of a corruption due to e.g. an ESD event. In other examples, the memory locations 300 may be set to read-only by the CPU following writing of the magic numbers. A difference in the number that is read from a memory location 300 from the number that was written to the memory location 300 is not expected (as that memory location was made read-only), indicating that a corruption has occurred.

The CPU 101 may periodically read each memory location 300 and, in response to determining that a magic number has changed, initiate a reboot of the electronic device 100. Determining that the read content of said memory location is different from the at least one number that was stored in said memory location may take into account normal changes to data, etc. that is stored in the memory, for example during normal usage of peripheral devices of the electronic device.

In some examples, determining if the read content of a memory location 300 has changed may be achieved by direct comparison of what was written with what was read. Other examples are possible, such as the example described below, which do not require the CPU 101 to maintain a record of the written values.

The CPU 101 may be configured to write a plurality of magic numbers to different memory locations 300 in the third portion 113. In these cases, the magic numbers may form a sequence or pattern. For example, the magic numbers may all be the same numeric value. In other examples, the magic numbers form an arithmetic, geometric, or other kind of mathematical sequence (e.g. the Fibonacci sequence). As the sequence adheres to a fixed mathematical rule, the CPU 101 is able to determine that one or more magic numbers has become corrupted by inspecting the memory locations 300 to determine that the rule is broken at one or more memory location 300.

As a specific example, the magic number in a first of the memory locations 300 may be "1", the magic number in a second of the memory locations 300 may be "2", the magic number in a third of the memory locations 300 may be "4", and so on (doubling each time). The expected magic number in the nth of the memory locations 300 is therefore 2ⁿ. The CPU 101 may read out the memory locations 300 in order, checking each time that the current magic number is double the last. If it is not, then the CPU 101 knows that corruption has occurred, and the electronic device 100 restarts. This reduces the expected number of read operations required to determine corruption.

When there are a plurality of magic numbers, each stored to a different respective memory location 300 in the third portion 113, the CPU 101 may be configured to reboot only that part of the peripheral device which uses that memory location 300.

Methods for restarting electronic devices such as electronic device 100 are well-known in the art and so not discussed in detail here. Following the restart, the CPU 101 re-writes magic numbers to the memory locations 300. These newly written magic numbers may or may not be different from the previously written magic numbers. What matters is that the CPU 101 knows what values the magic numbers should be, and can therefore determine corruption of one or more of the memory locations 300 in the third portion 113. This is possible even despite the fact that the peripheral device (and therefore values stored to the third portion 113) may change from one moment to the next.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of determining possible corruption of data stored in a memory used by an electronic device, the memory having a first portion that is used by an operating system of the electronic device, a second portion that is used by one or more software applications running on the electronic device, and a third portion that is used by a peripheral device of the electronic device, the method comprising:
storing at least one number in a memory location of the third portion of the memory;
reading the content of said memory location; and
determining that corruption of data stored in the third portion of the memory has occurred if the read content of said memory location is different from the at least one number that was stored in said memory location.

2. A method according to claim 1, comprising determining that corruption of data stored in said memory location has occurred if the read content of said memory location is different from the at least one number that was stored in said memory location and there has been no intervening instruction to change the content of said memory location.

3. A method according to claim 1 or claim 2, wherein said memory location is set to be read-only after the at least one number was stored in said memory location.

4. A method according to any of claims 1 to 3, wherein the memory is a volatile memory.

5. A method according to any of claims 1 to 4, comprising storing plural numbers in plural locations.

6. A method according to claim 5, wherein the numbers stored form a mathematical sequence.

7. A method according to any of claims 1 to 6, wherein the third portion of the memory is physically located in or on the peripheral device.

8. A method according to any of claims 1 to 7, comprising restarting the electronic device in response to determining that the read content of said memory location is different from the at least one number that was stored in said memory location.

9. An electronic device comprising a memory having a first portion that is used by an operating system of the electronic device, a second portion that is used by one or more software applications running on the electronic device, and a third portion that is used by a peripheral device of the electronic device;
wherein the electronic device is configured to:
store at least one number in a memory location of the third portion of the memory;
read the content of said memory location; and
determine that corruption of data stored in the third portion of the memory has occurred if the read content of said memory location is different from the at least one number that was stored in said memory location.

10. An electronic device according to claim 9, wherein the third portion of the memory is physically located in or on the peripheral device.

11. An electronic device according to claim 9 or claim 10, comprising one or more peripheral devices attached to or otherwise in communication with the electronic device.

12. An electronic device according to any of claims 9 to 11, wherein the memory is a volatile memory.
